# EUROPÄISCHE PATENTSCHRIFT

(11) **EP 1 784 675 B1**
(45) Veröffentlichungstag und Bekanntmachung des Hinweises auf die Patenterteilung: **15.10.2008**
(21) Anmeldenummer: 05778181.7
(22) Anmeldetag: 30.08.2005
(51) Int. Cl.: G02B 21/36, G02B 21/26

(54) **SCANNERANORDNUNG UND VERFAHREN ZUM OPTISCHEN ABTASTEN EINES OBJEKTS**
SCANNER ARRANGEMENT AND METHOD FOR OPTICALLY SCANNING AN OBJECT
SYSTEME A BALAYAGE ET PROCEDE DE BALAYAGE OPTIQUE D'UN OBJET

(30) Priorität: 02.09.2004 DE 102004042913
(43) Veröffentlichungstag der Anmeldung: 16.05.2007
(73) Patentinhaber: Westfälische Wilhelms-Universität Münster, 48149 Münster (DE)
(72) Erfinder: FREKERS, Dieter, 48341 Altenberge (DE); WACHSMANN, Christian, 48159 Münster (DE); AKSIT, Ishak, 48159 Münster (DE)
(74) Vertreter: Viering, Hans-Martin
(86) Internationale Anmeldenummer: PCT/DE2005/001516
(87) Internationale Veröffentlichungsnummer: WO 2006/024279

(56) Entgegenhaltungen:
- EP-A- 0 557 558
- US-A- 5 912 699
- US-A1- 2002 089 740

## Beschreibung

Die Erfindung betrifft eine Scanneranordnung und ein Verfahren zum optischen Abtasten eines Objekts.

Im Bereich Medizin, Biophysik, Biologie, Pharmakologie, Materialkontrolle und Bildarchivierung histologischer Präparate werden optische Abtastmikroskope (Scanning-Mikroskope) benötigt, welche einen hohen Durchsatz aufweisen (d.h. in kurzer Zeit eine große Menge an Objekten optisch erfassen können) und große Flächen, beispielsweise in der Größenordnung von bis zu 20 cm x 20 cm, bei einer typischen Bildauflösung von etwa 1 µm bildmäßig erfassen können. Für bestimmte Applikationen sollen außerdem Tiefenprofile des optisch abzutastenden Objekts erstellt werden können.

Ein derartiges Abtastmikroskop ist üblicherweise mit einer Bild-erzeugenden Scannerkamera ausgerüstet, deren Bildpunkte als integrierte Schaltung (Chip) in CMOS-Technologie hergestellt sind und welche in der Bildebene des Mikroskops angeordnet ist. Ein Objektivlinsensystem in dem Mikroskop erlaubt verschiedene, für die Mikroskopie typische Vergrößerungen von Objektbildern in der Objektebene, beispielsweise 10-fach, 20-fach, 50-fach, 100-fach, usw.

Für das optische Abtasten ("Scannen") eines Objekts wird üblicherweise ein Kreuz-Verschiebetisch computergesteuert horizontal bewegt, wobei die beiden Grundrichtungen dieser horizontalen Bewegung üblicherweise als "x-Richtung" und als "y-Richtung" bezeichnet werden. Die Bewegung in "z-Richtung", d.h. die vertikale Bewegung und damit die Fokussierung des Mikroskops, wird mittels einer computergesteuerten Linearführung des Objektivlinsensystems gewährleistet. In Abhängigkeit von der Vergrößerung und den Spezifikationen des Objektivlinsensystems ist die Größe eines typischen Sichtfeldes ("field of view") eines derartigen Mikroskops etwa 200 µm x 200 µm, welches in der Bildebene auf den fotoempfindlichen (z.B. CMOS) -Bildaufnahmechip der Scannerkamera vollständig abgebildet wird. Als Scannerkamera wird heutzutage eine Farbkamera mit einer Auflösung von mehr als ab 1 Mpixel verwendet.

Bei einer optisch abzutastenden Fläche von 10 cm x 10 cm werden somit von der Scannerkamera etwa 250.000 Einzelbilder erzeugt. Diese Zahl muss unter Umständen noch mit der Zahl der Tiefenprofilbilder multipliziert werden. Die schrittweise aufgenommenen, "nebeneinander liegenden" Einzelbilder einer jeden Ebene können dann durch sogenanntes "softwarestitching" zu einem oder mehreren Gesamtbildern zusammengefügt werden. Die nachfolgende Analyse der Gesamtbilder kann computergesteuert automatisch geschehen und ist applikationsabhängig.

Die elektronische Erfassung derartig großer Datenmengen sowie die gleichzeitige Bildverarbeitung bzw. Bildspeicherung in Echtzeit ist weitgehend unproblematisch und derzeitig mit etwa 10 - 100 Bildern pro Sekunde ("frames per second" - fps) bei voller Bildgröße realisiert. Zukünftige Entwicklungen werden diesen Wert vermutlich noch einmal um einen Faktor 10 steigern können. Wird nun eine Bildverarbeitungsrate von 100 fps zu Grunde gelegt, so ist eine vollständige mikroskopische Bilderfassung der Fläche im oben angegebenen Beispiel von 100 cm² elektronisch in etwa 40 Minuten möglich. Sollen nur Teile der Fläche mikroskopisch erfasst werden (z.B. eine Anordnung von Objektträgern oder eine Proben-Matrix), reduziert sich diese Zahl entsprechend.

Problematisch ist jedoch die mechanische Realisierung der Bewegungsvorgänge, da für die Aufnahme eines Bildes das Objekt immer in eine Ruheposition gebracht werden muss. Die Mechanik eines handelsüblichen Kreuz-Verschiebetisches ist aber nicht in der Lage, eine derart hohe Zahl von Start-Vorgängen (Beschleunigungen) und Stopp-Vorgängen (Abbremsungen), gemäß oben beschriebenem Beispiel 100 Start-/Stopp-Vorgänge pro Sekunde, bei gleichzeitig geringem Hub (ca. 200 µm) durchzuführen.

Hinzu kommt eine zusätzlich auftretende Instabilität des mechanischen Systems des Abtastmikroskops auf Grund nicht vermeidbarer erheblicher mechanischer Schwingungen, welche von den in kurzer Zeit auftretenden Start-/Stopp-Vorgängen verursacht werden. Die Zahl der Start-/Stopp-Vorgänge im Dauerbetrieb ist daher auf etwa 1 - 3 pro Sekunde begrenzt. Notwendige längere Verfahrwege, wie beispielsweise beim Wiederauffinden bestimmter Positionen, beim Anfahren von Objektträgern oder bei Mehrfachproben sind für die Zeitbilanz eines Abtast-Vorgangs unerheblich.

Der Erfindung liegt somit das Problem zugrunde, eine Scanneranordnung, z.B. zum Einsatz in einem Scanning Mikroskop, sowie ein Verfahren zum optischen Abtasten eines Objekts anzugeben, bei der/dem ein Objekt, welches eine optisch abzutastende Fläche in der Größenordnung von 100 cm² aufweist, mit einer Bildverarbeitungsrate von 100 fps und darüber unter Vermeidung der aus dem Stand der Technik bekannten mechanischen Schwingungen einfach optisch abgetastet werden kann.

US 2002/089740 A1 offenbart eine Scanneranordnung mit einem antreibbaren, bewegbaren Objekttisch. Mit Hilfe der von einer Stroboskoplampe erzeugten kurzen Lichtblitze werden stehende Bilder des Objektes erzeugt, während der Objekttisch kontinuierlich in Bewegung bleibt.

Eine erfindungsgemäße Scanneranordnung, insbesondere ein Scanning-Mikroskop, zum optischen Abtasten eines Objekts in einer Folge von Abtastschritten, weist auf einen antreibbaren, bewegbaren Objekttisch und ein Scannerobjektiv, welches eine Frontobjektivlinse an einem Objektivlinsenschlitten aufweist, welcher von einem Schlittenantrieb parallel zu dem Objekttisch bewegbar ist, wobei der Objekttisch für eine durchgehend kontinuierliche Bewegung während der Folge von Abtastschritten antreibbar ist und der Objektivlinsenschlitten mit der Frontobjektivlinse in jedem der Abtastschritte für einen Vorbewegungsschritt, in welchem die Frontobjektivlinse aus einer Ausgangsstellung heraus synchron mit dem Objekttisch mitbewegt wird, und jeweils zwischen aufeinander folgenden Abtastschritten für eine Rückbewegung in die Ausgangsstellung antreibbar ist, wobei das optische Abtasten des Objekts während der kontinuierlichen Bewegung des Objekttischs durchführbar ist.

Bei einem erfindungsgemäßen Verfahren zum optischen Abtasten eines Objekts in einer Folge von Abtastschritten mittels einer Scanneranordnung, insbesondere eines Scanning-Mikroskops, welche ein Scannerobjektiv mit einer Frontobjektivlinse aufweist, werden die Abtastschritte während der kontinuierlichen Bewegung des Objekts durchgeführt, indem die Frontobjektivlinse des Scannerobjektivs während jedes der Abtastschritte aus einer Ausgangsposition heraus synchron mit dem Objekt mitbewegt wird und jeweils zwischen den Abtastschritten in die Ausgangsstellung zurückbewegt wird.

Anschaulich befindet sich bei sich bewegendem Objekt die Frontobjektivlinse des Scannerobjektivs während jedes der Abtastschritte, d.h. während der Aufnahme eines Abbildes des sichtbaren Objektausschnitts mittels einer an das Scannerobjektiv optisch gekoppelten Scannerkamera, relativ zum sich bewegenden Objekt erfindungsgemäß "in Ruhe", da der Objektivlinsenschlitten mit der daran befestigten Frontobjektivlinse mit dem sich bewegenden Objekt gleichförmig und synchron, d.h. in gleicher Richtung und mit gleicher Geschwindigkeit, mitbewegt wird.

Auf Grund des Rückbewegens der Frontobjektivlinse in ihre Ausgangsposition zwischen zwei aufeinander folgenden Abtastschritten startet die Frontobjektivlinse somit bei jedem nachfolgenden Abtastschritt stets von der gleichen Stelle aus.

Der Antrieb des Objekttischs, der Schlittenantrieb sowie der Auslöse- und Blendenmechanismus der Scannerkamera werden mittels einer geeigneten Steuerung, beispielsweise mittels eines Steuercomputers, angetrieben, welche das Zusammenspiel der Vorbewegung des Objekts mittels des Objekttischs, der Vor- und Rückbewegung der Frontobjektivlinse an dem Objektivlinsenschlitten mittels des Schlittenantriebs sowie der Bildaufnahme der Scannerkamera mittels des Auslöse- und Blendenmechanismus steuert.

Ein Vorteil der Erfindung ist darin zu sehen, dass mittels des Mitbewegens der Frontobjektivlinse des Scannerobjektivs mit dem Objekt während jedes der Abtastschritte die hohe Anzahl der aus dem Stand der Technik bekannten Start-/Stopp-Vorgänge des Objekttisches (üblicherweise ein Kreuz-Verschiebetisch) vermieden wird. Daraus resultiert erfindungsgemäß im Vergleich zum Stand der Technik eine erheblich verbesserte Stabilität der gesamten Scanneranordnung, was eine erheblich höhere Bildaufnahmefrequenz ermöglicht.

Ein weiterer Vorteil der Erfindung ist, dass der zum Antreiben des Objekttisches verwendete Motor im Vergleich zum Stand der Technik auf Grund der erheblich reduzierten Start-/Stopp-Vorgänge einen deutlich geringeren Verschleiß aufweist. Somit wird erfindungsgemäß die Lebensdauer des Objekttisches und diesbezüglich folglich auch der gesamten Scanneranordnung erhöht. Außerdem reicht als Antrieb für den Objekttisch ein einfacher und damit billiger, und sich erfindungsgemäß mit konstanter Geschwindigkeit bewegender Linearmotor aus.

Noch ein weiterer Vorteil der Erfindung ist darin zu sehen, dass die für das optische Abtasten ("Scannen") des Objekts benötigte Zeit kürzer ist als im Stand der Technik, da die Erfindung auf die zeitaufwändigen Start-/Stopp-Vorgänge verzichtet. Insbesondere kann im Vergleich zum Stand der Technik die Bildaufnahmerate um einen Faktor 30 bis 100 erhöht werden.

Vorzugsweise weist der Schlittenantrieb eine Vorbewegungsvorrichtung mit einem Piezo-Element auf. Die Vorbewegungsvorrichtung dient dabei dem Verschieben der Frontobjektivlinse an dem Objektivlinsenschlitten parallel zu und in gleicher Geschwindigkeit und Richtung mit dem Objekt aus ihrer Ausgangsposition in eine Endposition während der Abtastvorgänge. Das Piezo-Element weist bevorzugt einen maximalen Hub auf, welcher im Bereich zwischen 100 µm und 1 mm liegt und insbesondere 500 µm beträgt. Außerdem ist das Piezo-Element vorzugsweise mit einer Frequenz im Bereich von zwischen 10 Hz und 200 Hz, insbesondere mit einer Frequenz von 100 Hz, betreibbar.

Der Schlittenantrieb weist bevorzugt eine Rückbewegungsvorrichtung mit einem Permanentmagneten auf. Die Rückbewegungsvorrichtung dient dabei dem Verschieben der Frontobjektivlinse an dem Objektivlinsenschlitten aus ihrer Endposition in ihre Ausgangsposition zwischen den Abtastschritten. Insbesondere werden als bevorzugte Weiterbildung zur Rückbewegungsvorrichtung zwei Permanentmagnete verwendet. Der eine Permanentmagnet ist dazu an dem Objektivlinsenschlitten des Scannerobjektivs angebracht und der zweite Permanentmagnet ist an einem separaten Halter der Scanneranordnung angebracht, wobei sich die beiden Permanentmagnete auf Grund der Anordnung ihrer Magnetpole und der dadurch erzeugten Magnetkraft gegenseitig abstoßen.

Sobald an dem Piezo-Element der Vorbewegungsvorrichtung eine Spannung anliegt, verschiebt es den Objektivlinsenschlitten und damit die Frontobjektivlinse von ihrer Ausgangsposition aus in Richtung entgegen der von den beiden Permanentmagneten der Rückbewegungsvorrichtung ausgehenden Magnetkraft. Auf Grund der Magnetkraft wird die an dem Objektivlinsenschlitten angebrachte Frontobjektivlinse nach dem Spannungsfrei-Schalten des Piezo-Elements wieder in ihre Ausgangsposition verschoben.

In einer bevorzugten Weiterbildung der Erfindung weist die Frontobjektivlinse einen Linsen-Sichtbereich auf dem Objekt und das Scannerobjektiv einen Objektiv-Sichtbereich auf dem Objekt auf. Der Linsen-Sichtbereich ist vorzugsweise größer als der Objektiv-Sichtbereich. Der jeweilige Sichtbereich auf dem Objekt ergibt sich dabei aus dem Sichtfeld der jeweiligen optischen Komponente(n). Insbesondere ist der Durchmesser der Frontobjektivlinse größer als der Durchmesser des Objektiv-Sichtfeldes am Ort der Frontobjektivlinse. Dabei ist die Abweichung der Frontobjektivlinse von der optischen Achse des Scannerobjektivs während des Vorbewegungsschritts immer noch derart klein, dass in der Bildebene auf dem Bildaufnahmechip der Scannerkamera keine erkennbaren zusätzlichen Abbildungsfehler entstehen.

In noch einer bevorzugten Weiterbildung der erfindungsgemäßen Scanneranordnung weist diese ein an dem Scannerobjektiv angebrachtes zusätzliches Piezo-Elemente auf, welches derart angebracht ist, dass das Scannerobjektiv entlang seiner optischen Achse verstellbar ist, so dass der Fokus des Scannerobjektivs einstellbar ist. Dadurch kann ein Tiefenprofil des Objekts aufgenommen werden. Diese Einstellung des Fokus kann beispielsweise während des Mitbewegens der Frontobjektivlinse mit dem Objekt von der Ausgangsposition in die Endposition der Frontobjektivlinse erfolgen.

Die Scannerkamera weist bevorzugt einen Bildaufnahmechip auf, welcher in CMOS-Technologie hergestellt ist.

Die als Scanning-Mikroskop verwendete Scanneranordnung ist insbesondere für den Einsatz in den Bereichen Bildarchivierung, Biologie, Biophysik, Pharmakologie, Materialkontrolle und Medizin histologischer Präparate vorgesehen.

Ein Ausführungsbeispiel der Erfindung ist in den Figuren schematisch dargestellt und wird im Folgenden näher erläutert. Dabei bezeichnen gleiche Bezugszeichen gleiche Komponenten.

### Es zeigen

- Figur 1: eine schematische Darstellung des Prinzips der Bildaufnahme gemäß einem Ausführungsbeispiel der Erfindung;
- Figur 2: eine Querschnittsansicht einer Scanneranordnung gemäß dem Ausführungsbeispiel der Erfindung;
- Figur 3: eine perspektivische Explosionsansicht der Scanneranordnung gemäß dem Ausführungsbeispiel der Erfindung;
- Figur 4: eine Seitenansicht der Scanneranordnung gemäß dem Ausführungsbeispiel der Erfindung; und
- Figur 5: eine bildliche Wiedergabe eines Objektes, welches aus mehreren mittels der Scanneranordnung gemäß dem Ausführungsbeispiel der Erfindung aufgenommenen Abbildungen zusammengesetzt wurde.

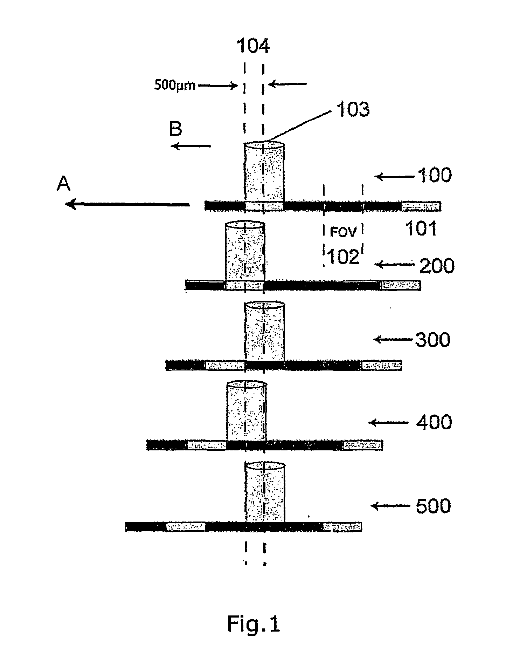

**Fig.1** zeigt eine schematische Darstellung des Prinzips der Bildaufnahme gemäß einem Ausführungsbeispiel der Erfindung.

Mit Bezugszeichen 100 wird ein abzutastendes Objekt 101 in einer ersten Position dargestellt, welches sich in Richtung des Pfeils A mit konstanter Geschwindigkeit kontinuierlich bewegt. Das Objekt 101 weist mehrere gleichartige Linsen-Sichtbereiche 102 auf, welche schrittweise nacheinander mittels einer Scannerkamera (nicht dargestellt) durch ein Scannerobjektiv hindurch aufgenommen werden sollen. Dabei entspricht die Querschnittsfläche der Linsen-Sichtbereiche 102 auf dem Objekt 101 dem Querschnitt des Sehfelds ("field of view") einer Frontobjektivlinse 103 auf dem Objekt 101. Die Frontobjektivlinse 103 ist Teil des Scannerobjektivs, welche in diesem Ausführungsbeispiel eine Einzellinse mit einem Durchmesser von ca 5 mm aufweist. Die Scannerkamera weist ein Kamera-Sehfeld auf, dessen Querschnitt auf dem Objekt 101 als Kamera-Sichtbereich 104 bezeichnet wird, dessen Größe abhängig vom Objektiv ist. Der Linsen-Sehbereich 102 (FoV) der Frontobjektivlinse 103 ist in Position 100 linksbündig mit dem Kamera-Sehbereich 104 dargestellt.

Während der Aufnahme eines Abbildes des Objekts 101 mittels der Scannerkamera, d.h. während eines Abtastschritts, wird zusätzlich zu dem sich bewegenden Objekt 101 auch die Frontobjektivlinse 103 bewegt. Die Bewegung der Frontobjektivlinse 103 wird gemäß dem Ausführungsbeispiel mittels eines Piezo-Kristalls bewerkstelligt, welcher die Frontobjektivlinse 103 um bis zu 500 µm verschieben kann, und wird durch den Pfeil B angedeutet. Dabei wird die Frontobjektivlinse 103 um die gleiche Wegstrecke, mit der gleichen Geschwindigkeit und in die gleiche Richtung wie das Objekt 101 bewegt, d.h. die Bewegung der Frontobjektivlinse 103 ist an die Bewegung des Objekts 101 angepasst. Diese Anpassung der Bewegung der Frontobjektivlinse 103 an die Bewegung des Objekts 101 erfolgt mittels einer geeigneten Steuerung, beispielsweise einem Steuercomputer. Anschaulich befindet sich die Frontobjektivlinse 103 während des Abtastschritts bezüglich des Objekts 101 "in Ruhe", d.h. die Scannerkamera nimmt ein "stehendes Bild" auf.

Am Ende des jeweiligen Abtastschritts befindet sich die Frontobjektivlinse 103 in der mit Bezugszeichen 200 bezeichneten Endposition, in welcher der Linsen-Sehbereich 102 der Frontobjektivlinse 103 rechtsbündig mit dem Kamera-Sehbereich 104 dargestellt ist. Vor Beginn des nachfolgenden Abtastschritts wird nun ausschließlich die Frontobjektivlinse 103 wieder in ihre Ausgangsposition zurückbewegt, das Objekt 101 hingegen wird in Richtung des Pfeils A weiterbewegt. Das Zurückbewegen der Frontobjektivlinse 103 erfolgt gemäß dem Ausführungsbeispiel mittels geeignet angebrachter Permanentmagnete (Details hierzu sind in den nachfolgenden Figuren beschrieben). Die zurückbewegte Frontobjektivlinse 103 ist in Position 300 dargestellt. Position 300 gleicht der Position 100 mit Ausnahme des um einen Linsen-Sehbereich 102 (FoV) in Richtung. Pfeil A verschobenen Objekts 101.

Während des nächstfolgenden Abtastschritts werden nun wieder sowohl das Objekt 101 als auch die Frontobjektivlinse 103 in Richtung Pfeil A bzw. B verschoben. Am Ende des nächstfolgenden Abtastschritts befinden sich das Objekt 101 und die Frontobjektivlinse 103 in Position 400, welche der Position 200 mit Ausnahme des um einen Linsen-Sehbereich 102 in Richtung Pfeil A verschobenen Objekts 101 gleicht. Anschließend wird die Frontobjektivlinse 103 wieder in ihre Anfangsposition zurückbewegt, wonach sich das System in der mit Bezugszeichen 500 bezeichneten Position befindet. Position 500 gleicht der Position 100 mit Ausnahme des um zwei Linsen-Sehbereiche 102 in Richtung Pfeil A verschobenen Objekts 101.

Im Folgenden wird nun eine als Scanning-Mikroskop vorgesehene Scanneranordnung 50 gemäß dem Ausführungsbeispiel der Erfindung im Detail beschrieben.

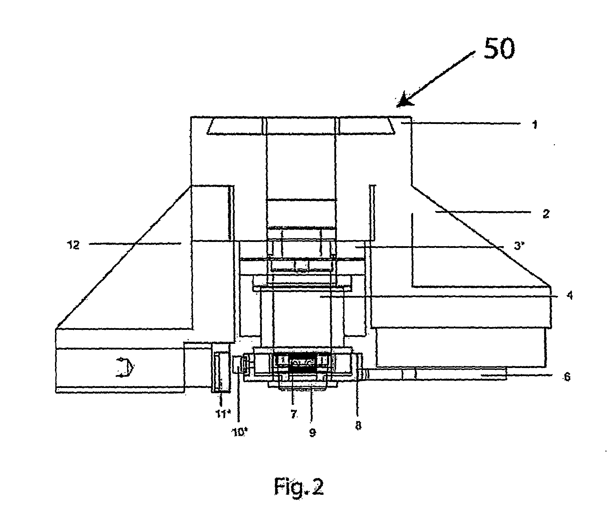

**Fig.2** stellt eine Querschnittsansicht der Scanneranordnung 50 dar.

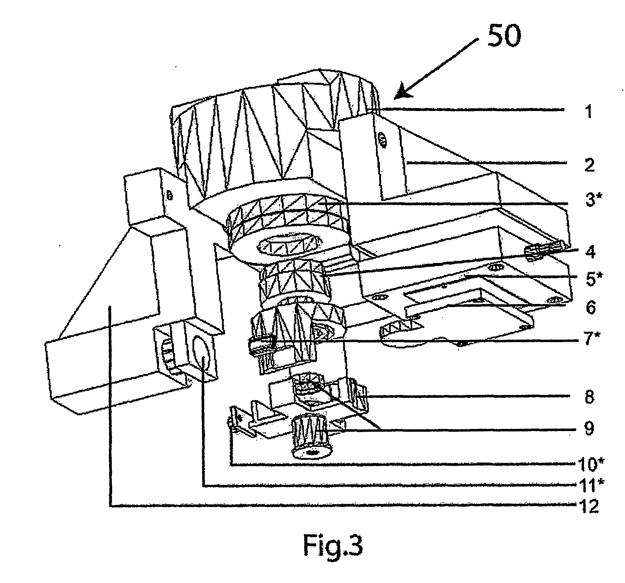

Die Scanneranordnung 50 weist einen Halter 1 auf, an dessen oberem Ende eine herkömmliche Scannerkamera (nicht dargestellt und nicht näher beschrieben) angebracht ist. Die Scannerkamera ist ortsfest und bleibt daher beim optischen Abtasten eines Objekts still stehen, d.h. das Objekt wird an der Scannerkamera vorbei bewegt. An dem Halter 1 ist mittig unterhalb der Scannerkamera ein piezo-gesteuerter Objektivhalter 3 befestigt, an dessen Unterseite ein Scannerobjektiv 4, 7-10 (in Fig.3) befestigt ist. Der piezogesteuerte Objektivhalter 3 dient dem Einstellen des genauen Fokuspunktes des Scannerobjektivs 4, 7-10 (in Fig.3), d.h. dem Verstellen der Position des Scannerobjektivs 4, 7-10 (in Fig. 3) entlang der optischen Achse des Scannerobjektivs 4, 7-10 (in Fig. 3) relativ zur Scannerkamera. Gemäß diesem Ausführungsbeispiel wird als piezo-gesteuerter Objektivhalter 3 das Modell Pifoc P-725.4CD verwendet.

Das Scannerobjektiv 4, 7-10 (vgl Fig. 3) weist ein am piezogesteuerten Objektivhalter 3 befestigtes, ebenso wie die Scannerkamera ortsfestes Objektivoberteil 4 und ein verschiebbares Objektivunterteil 7-10 (in Fig. 3) auf. Das Objektivoberteil 4 weist gemäß dem Ausführungsbeispiel eine einschraubbare Streulichtschutzblende, zwei Minirail-Befestigungseinfräsungen und einen Arretierungsring auf. Außerdem ist das Objektivoberteil 4 mit der Scannerkamera optisch gekoppelt. Das Objektivunterteil 7-10 weist mit den zwei Minirail-Befestigungseinfräsungen im Eingriff stehende Minirail-Führungen 7 (vgl. Fig.3), gemäß dem Ausführungsbeispiel zweimal Modell MDN-05-10-05, einen Objektivlinsenschlitten 8, welcher auch Linsenführungsteller genannt wird und ein Einschraubgewinde für einen Frontlinsenhalter, einen Permanentmagnethalter sowie ein teflonbeschichtetes Gleitlager für eine Druckplatte 6 aufweist, einen einschraubbaren Frontlinsenhalter 9 mit Frontlinsendeckelschraube und einen in den Permanentmagnethalter an dem Objektivlinsenschlitten 8 eingebauten Permanentmagneten 10 auf.

An dem Halter 1 ist links und rechts neben dem Scannerobjektiv 4, 7-10 (vgl. Fig. 3) jeweils ein Befestigungswinkel 2, 12 angebracht. An der Unterseite des rechten Befestigungswinkels 2 sind ein mittels eines Piezo-Elements angetriebener Verschiebetisch 5, gemäß dem Ausführungsbeispiel ein Hera-Piezo-Tisch Modell P-625.1CD, und darunter eine Druckplatte 6 angebracht. Die Druckplatte 6 wird mittels des Verschiebetisches 5 parallel zur Bewegungsrichtung des mittels eines Objekttisches verschobenen, optisch abzutastenden Objekts in Richtung des linken Befestigungswinkels 12 verschoben. Da die Druckplatte 6 an dem Objektivlinsenschlitten 8 anliegt, wird beim Bewegen der Druckplatte 6 gleichzeitig der Objektivlinsenschlitten 8 in die gleiche Richtung bewegt. Diese Bewegung wird durch die Minirail-Führungen 7 (vgl Fig. 3) entsprechend unterstützt.

An der Unterseite des linken Befestigungswinkels 12 ist eine verstellbare Führung angebracht, an welcher ihrerseits ein Permanentmagnet 11 befestigt ist. Die verstellbare Führung dient der genauen Positionierung des Permanentmagneten 11, welcher auch als Permanentmagnetstempel bezeichnet werden kann, in Bezug auf den Permanentmagneten 10 am Objektivlinsenschlitten 8. Dabei ist es wichtig, auf die richtige Anordnung der Pole der beiden Permanentmagnete 10 und 11 zu achten: Da die Druckplatte 6 den Objektivlinsenschlitten 8 auf Grund des mittels Piezo-Element (genauer: piezo-elektrischem Element) angetriebenen Verschiebetisches 5 beim Anliegen einer Spannung an dem zugehörigen Piezo-Kristall in Richtung zu dem linken Befestigungswinkel 12 hin verschiebt, müssen die beiden Permanentmagnete 10, 11 sich magnetisch abstoßend montiert sein, um den Objektivlinsenschlitten 8 bei spannungsfreiem Piezo-Kristall in die Ausgangsposition zurückzubewegen.

Die Scanneranordnung 50, von den Erfindern AMBIS-System (Anti Motion-Blurring Imaging Scanning System = gegen die Erzeugung von Bewegungsunschärfe wirkendes Bilderfassungssystem) genannt, erlaubt es, die aus dem Stand der Technik bekannten mechanischen Start-/Stopp-Vorgänge in einem Mikroskopsystem vollständig zu umgehen. Dies wird durch den Einsatz eines piezo-elektrischen Elements mit langem Hub gewährleistet. Ein derartiges piezo-elektrisches Element bewegt nur noch das wenige Gramm schwere Objektivunterteil 7-10 mit der Frontobjektivlinse und dem Objektivlinsenschlitten 8. Der Objekttisch kann in der y-Richtung, d.h. vom rechten Befestigungswinkel 2 aus gesehen in Richtung linker Befestigungswinkel 12, mit konstanter Geschwindigkeit unter der Frontobjektivlinse hinweg bewegt werden. Das Piezo-Element kompensiert die Bewegung des Objekttischs in der Weise, dass es das Objektivunterteil 7-10 mit der Frontobjektivlinse und dem Objektivlinsenschlitten 8 in die gleiche Richtung und mit gleicher Geschwindigkeit wie das Objekt synchron mitbewegt, so dass für die Zeit der Aufnahme eines Teilbilds des Objekts, d.h. während eines Abtastschritts, für die Scannerkamera ein "stehendes Bild" entsteht.

Werden bei diesem Ausführungsbeispiel eine Bildaufnahmerate von 100 fps sowie ein Sichtfeld von 200 µm x 200 µm auf dem Objekt zu Grunde gelegt, so können bei einer Bewegung des Objekttisches mit einer Geschwindigkeit von 2 cm/s alle Abtastschritte nahtlos aneinandergefügt werden.

Das in diesem Ausführungsbeispiel für die horizontale Verschiebung des Objektivunterteils 7-10 verwendete Piezo-Element ist mit einem maximalen Hub von 500 µm spezifiziert und kann bis zu einer Frequenz von 100 Hz durchlaufen werden. Nach Erreichen des gewünschten Hubs, welcher in Abhängigkeit von der jeweiligen Applikation der Breite eines Linsen-Sichtbereichs auf dem Objekt entspricht, wird das Objektivunterteil 7-10 mit der Frontobjektivlinse und dem Objektivlinsenschlitten 8 durch Abschalten der Piezo-Spannung und unterstützt durch die gleich gepolten Magnetfelder der beiden Permanentmagnete 10, 11 in die ursprüngliche Position zurückgeführt. Dieser Zurückführungs-Prozess dauert weniger als 5 ms.

Die Bewegung des Piezo-Kristalls des Verschiebetisches 5 ist über ein elektronisches Feed-back-System mit der Bewegung der y-Achse des Objekttisches gekoppelt. Damit entsteht über einen Verfahrbereich von 500 µm (oder über einen Zeitraum von 25 ms unter Anwendung des obigen Geschwindigkeitswerts von 2 cm/s) der Eindruck eines "stehenden Bildes". Diese Zeit ist deutlich länger als die elektronische Blenden-Öffnungszeit der Scannerkamera. Die Abweichung der Frontobjektivlinse von der optischen Achse der Scanneranordnung 50 des Abtastmikroskops ist während des Bewegungsvorgangs immer noch derart klein, dass in der Bildebene auf der Scannerkamera keine erkennbaren zusätzlichen Abbildungsfehler entstehen.

Das oben erwähnte elektronische Feed-back-System steuert in Abhängigkeit von der Bewegung der y-Achse des Objekttisches neben der Bewegung des Piezo-Kristalls des Verschiebetisches 5 auch die Blendenöffnung der Scannerkamera. Als elektronisches Feed-back-System kann ein handelüblicher Steuercomputer verwendet werden.

Die Bewegung des gesamten Objektivunterteils 7-10 in z-Richtung (d.h. entlang der optischen Achse des Scannerobjektivs 4, 7-10 bzw. senkrecht zur Verschiebeebene des Objekts) kann in gleicher Weise mittels mindestens einem Piezo-Element gesteuert werden. Dadurch ist eine gleichzeitige Aufnahme eines Tiefenprofils des optisch abzutastenden Objekts (oder auch eine mögliche Nachfokussierung der Scanneranordnung 50) während der Phase des "stehenden Bildes", d.h. während eines Abtastschritts, ebenfalls möglich.

**Fig.3** zeigt nun eine perspektivische Explosionsansicht der Scanneranordnung 50 gemäß dem Ausführungsbeispiel der Erfindung. In Fig.2 bereits beschriebene Teile werden nicht erneut beschrieben.

In dieser Darstellung der Scanneranordnung 50 sind nun auch die Minirail-Führungen 7, welche mit den Minirail-Befestigungseinfräsungen im Eingriff stehen, deutlich sichtbar. Diese Minirail-Führungen 7 gewährleisten, dass der Objektivlinsenschlitten 8 bei seiner Bewegung parallel zu dem Objekttisch über das abzutastende Objekt hinweg bezüglich des Objekttischs in vorgegebenem konstantem Abstand gehalten wird.

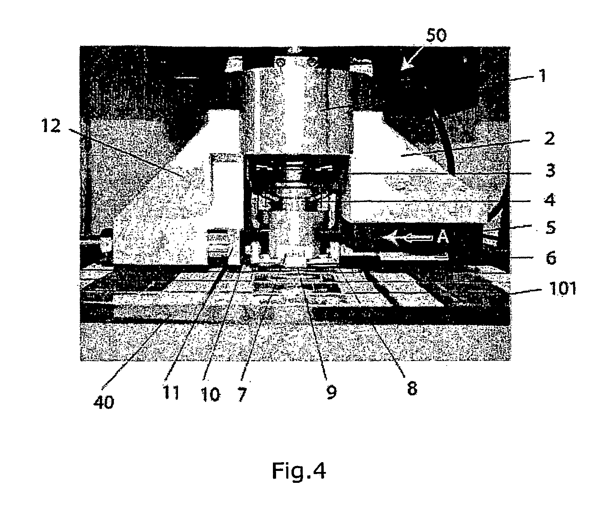

In **Fig.4** ist eine Seitenansicht der Scanneranordnung 50 gemäß dem Ausführungsbeispiel der Erfindung gezeigt. In Fig.2 bereits beschriebene Teile werden nicht erneut beschrieben.

Zusätzlich zu der Scanneranordnung 50 ist in Fig.4 ein abzutastendes Objekt 101 dargestellt, welches zum Verschieben auf einem Objekttisch 40 positioniert ist. Während das Objekt 101 mittels des Objekttisches 40 kontinuierlich in Richtung des Pfeils A verschoben wird sowie während jedes der Abtastschritte verschiebt der mittels Piezo-Element angetriebene Verschiebetisch 5 auch die Frontobjektivlinse in Richtung des Pfeils A, wobei die Kraft des Verschiebetisches 5 mittels der Druckplatte 6 auf den Objektivlinsenschlitten 8 übertragen wird, an welchem schließlich die zu bewegende Frontobjektivlinse befestigt ist.

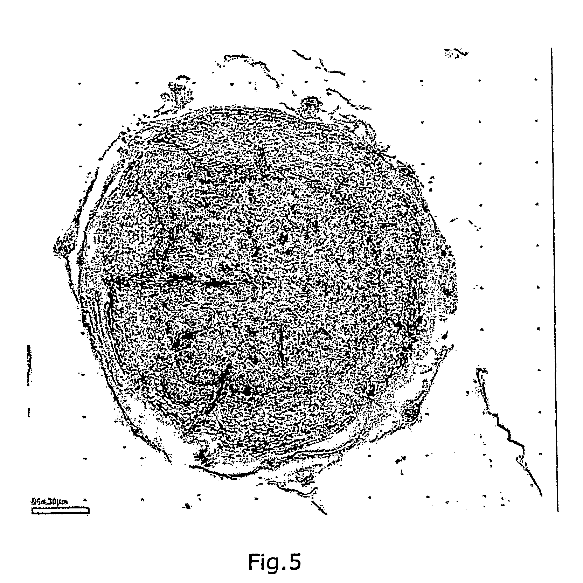

**Fig.5** stellt schließlich eine bildliche Wiedergabe 60 eines Objektes dar, welches aus mehreren mittels der Scanneranordnung 50 gemäß dem Ausführungsbeispiel der Erfindung aufgenommenen Teilbildern zusammengesetzt wurde.

Als Objekt wurde in diesem Ausführungsbeispiel der Querschnitt eines Wurzelstocks eines Maiglöckchens verwendet. Die Skala der bildlichen Wiedergabe 60 (siehe links unten in Fig.5) beträgt 654,30 µm. Mit der verwendeten Scanneranordnung 50 konnte für die bildliche Wiedergabe 60 eine Auflösung von zwischen 1 µm und 2 µm erzielt werden.

Da die in der Scanneranordnung 50 verwendete Scannerkamera an einen Computer zum Bildauslesen, zur Bildverarbeitung und zur Bildspeicherung angeschlossen ist, können nach Belieben bestimmte Bereiche der in Fig.5 dargestellten bildlichen Wiedergabe 60 des optisch abgetasteten Objekts per Software auch noch vergrößert dargestellt werden.

## Patentansprüche

1. Scanneranordnung (50), insbesondere Scanning-Mikroskop, zum optischen Abtasten eines Objekts (101) in einer Folge von Abtastschritten, mit einem antreibbaren, bewegbaren Objekttisch (40) und einem Scannerobjektiv (4, 7-10) welches eine Frontobjektivlinse (9, 103) aufweist, wobei der Objekttisch (40) für eine durchgehend kontinuierliche Bewegung während der Folge von Abtastschritten antreibbar ist, und das optische Abtasten des Objekts (101) während der kontinuierlichen Bewegung des Objekttischs (40) durchführbar ist,
**dadurch gekennzeichnet, dass**
die Frontobjektivlinse (9, 103) an einem Objektivlinsenschlitten (8) befestigt ist, welcher von einem Schlittenantrieb (5, 6, 10, 11) parallel zu dem Objekttisch (40) bewegbar ist, wobei der Objektivlinsenschlitten (8) mit der Frontobjektivlinse (9, 103) in jedem der Abtastschritte für einen Vorbewegungsschritt, in welchem die Frontobjektivlinse (9, 103) aus einer Ausgangsstellung heraus synchron mit dem Objekttisch (40) mitbewegt wird, und jeweils zwischen aufeinander folgenden Abtastschritten für eine Rückbewegung in die Ausgangsstellung antreibbar ist.

2. Scanneranordnung (50) gemäß Anspruch 1,
bei welcher der Schlittenantrieb (5, 6, 10, 11) eine Vorbewegungsvorrichtung (5, 6) mit einem Piezo-Element aufweist.

3. Scanneranordnung (50) gemäß Anspruch 1 oder 2,
bei welcher der Schlittenantrieb (5, 6, 10, 11) eine Rückbewegungsvorrichtung (10, 11) mit einem Permanentmagneten aufweist.

4. Scanneranordnung (50) gemäß Anspruch 2,
bei welcher das Piezo-Element einen maximalen Hub aufweist, welcher im Bereich zwischen 100 µm und 1 mm liegt und insbesondere 500 µm beträgt.

5. Scanneranordnung (50) gemäß Anspruch 2 oder 4,
bei welcher das Piezo-Element mit einer Frequenz im Bereich von zwischen 5 Hz und 200 Hz, insbesondere mit einer Frequenz von zwischen 25 und 120 Hz, betreibbar ist.

6. Scanneranordnung (50) gemäß einem der Ansprüche 1 bis 5, bei welcher die Frontobjektivlinse (9, 103) einen Linsen-Sichtbereich (102) auf dem Objekt (101) aufweist und bei welcher das Scannerobjektiv (4, 7-10) einen Objektiv-Sichtbereich (104) auf dem Objekt (101) aufweist, wobei der Linsen-Sichtbereich (102) größer als der Objektiv-Sichtbereich (104) ist.

7. Scanneranordnung (50) gemäß einem der Ansprüche 1 bis 6, mit einem an dem Scannerobjektiv (4, 7-10) angebrachten zusätzlichen Piezo-Element (3), welches derart angebracht ist, dass das Scannerobjektiv (4, 7-10) entlang seiner optischen Achse verstellbar ist, so dass der Fokus des Scannerobjektivs (4, 7-10) zum Aufnehmen eines Tiefenprofils des Objekts (101) einstellbar ist.

8. Verfahren zum optischen Abtasten eines Objekts (101) in einer Folge von Abtastschritten mittels einer Scanneranordnung (50), insbesondere eines Scanning-Mikroskops, welche ein Scannerobjektiv (4, 7-10) mit einer Frontobjektivlinse (9, 103) aufweist, bei dem die Abtastschritte während der kontinuierlichen Bewegung des Objekts (101) durchgeführt werden,
**dadurch gekennzeichnet, dass**
die Abtastschritte durchgeführt werden, indem die Frontobjektivlinse (9, 103) des Scannerobjektivs (4, 7-10) während jedes der Abtastschritte aus einer Ausgangsposition heraus synchron mit dem Objekt (101) mitbewegt wird und jeweils zwischen den Abtastschritten in die Ausgangsstellung zurückbewegt wird.

9. Verfahren gemäß Anspruch 8,
bei welchem das Mitbewegen der Frontobjektivlinse (9, 103) während der Abtastschritte mittels eines Piezo-Elements erfolgt.

10. Verfahren gemäß Anspruch 8 oder 9,
bei welchem das Zurückbewegen der Frontobjektivlinse (9, 103) zwischen den Abtastschritten mittels eines Permanentmagneten (10) erfolgt.

11. Verfahren gemäß einem der Ansprüche 8 bis 10,
bei welchem ein derartiges Scannerobjektiv (4, 7-10) mit Objektiv-Sichtbereich (104) und eine derartige Frontobjektivlinse (9, 103) mit Linsen-Sichtbereich (102) verwendet werden, dass der Objektiv-Sichtbereich (104) auf dem Objekt (101) größer als der Linsen-Sichtbereich (102) auf dem Objekt (101) ist.

12. Verfahren gemäß einem der Ansprüche 8 bis 11,
bei welchem ein an dem Scannerobjektiv (4, 7-10) angebrachtes zusätzliches Piezo-Element (3) verwendet wird, um das Scannerobjektiv (4, 7-10) entlang seiner optischen Achse derart verstellen zu können, dass der Fokus des Scannerobjektivs (4, 7-10) zum Aufnehmen eines Tiefenprofils des Objekts (101) während des Mitbewegens der Frontobjektivlinse (9, 103) mit dem Objekt (101) eingestellt werden kann.

## Claims

1. Scanner arrangement (50), in particular scanning
microscope, for optically scanning an object (101) in a series of scanning steps, with a drivable, movable object table (40) and a scanner objective (4, 7-10) which comprises a front objective lens (9, 103), wherein the object table (40) can be driven for a continuous movement during the series of scanning steps, and the optical scanning of the object (101) can be carried out during the continuous movement of the object table (40),
**characterised in that**
the front objective lens (9, 103) is fastened to an objective lens carriage (8) which can be moved parallel to the object table (40) by a carriage drive (5, 6, 10, 11), wherein the objective lens carriage (8) with the front objective lens (9, 103) can be driven in each of the scanning steps for an advance movement step, in which the front objective lens (9, 103) is moved out of a starting position in synchronism with the object table (40), and for a return movement to the starting position in each case between successive scanning steps.

2. Scanner arrangement (50) according to Claim 1,
in which the carriage drive (5, 6, 10, 11) comprises an advance movement device (5, 6) with a piezoelement.

3. Scanner arrangement (50) according to Claim 1 or 2,
in which the carriage drive (5, 6, 10, 11) comprises a return movement device (10, 11) with a permanent magnet.

4. Scanner arrangement (50) according to Claim 2,
in which the piezoelement has a maximum travel which lies in the range between 100 µm and 1 mm and is in particular 500 µm.

5. Scanner arrangement (50) according to Claim 2 or 4,
in which the piezoelement can be operated at a frequency in the range of between 5 Hz and 200 Hz, in particular at a frequency of between 25 Hz and 120 Hz.

6. Scanner arrangement (50) according to any one of Claims 1 to 5,
in which the front objective lens (9, 103) has a lens range of view (102) on the object (101) and in which the scanner objective (4, 7-10) has an objective range of view (104) on the object (101), wherein the lens range of view (102) is greater than the objective range of view (104).

7. Scanner arrangement (50) according to any one of Claims 1 to 6,
with an additional piezoelement (3) which is attached to the scanner objective (4, 7-10) and is attached such that the scanner objective (4, 7-10) can be displaced along its optical axis, so that the focal point of the scanner objective (4, 7-10) can be adjusted to pick up a depth profile of the object (101).

8. Method for optically scanning an object (101) in a series of scanning steps by means of a scanner arrangement (50), in particular a scanning microscope, which comprises a scanner objective (4, 7-10) with a front objective lens (9, 103), in which the scanning steps are carried out during the continuous movement of the object (101),
**characterised in that**
the scanning steps are carried out by moving the front objective lens (9, 103) of the scanner objective (4, 7-10) out of a starting position in synchronism with the object (101) during each of the scanning steps and moving it back to the starting position in each case between the scanning steps.

9. Method according to Claim 8,
in which the co-movement of the front objective lens (9, 103) during the scanning steps takes place by means of a piezoelement.

10. Method according to Claim 8 or 9,
in which the return movement of the front objective lens (9, 103) between the scanning steps takes place by means of a permanent magnet (10).

11. Method according to any one of Claims 8 to 10,
in which a scanner objective (4, 7-10) with an objective range of view (104) and a front objective lens (9, 103) with a lens range of view (102) are used which are of a type such that the objective range of view (104) on the object (101) is greater than the lens range of view (102) on the object (101).

12. Method according to any one of Claims 8 to 11,
in which an additional piezoelement (3), which is attached to the scanner objective (4, 7-10), is used in order to be able to displace the scanner objective (4, 7-10) along its optical axis such that the focal point of the scanner objective (4, 7-10) can be adjusted to pick up a depth profile of the object (101) during the co-movement of the front objective lens (9, 103) with the object (101).

## Revendications

1. Dispositif à balayage (50), en particulier microscope à balayage, pour la lecture optique d'un objet (101) en une série d'étapes de lecture, comprenant une platine porte-objet entraînable et déplaçable (40) et un objectif de balayage (4, 7 à 10), qui présente un objectif frontal (9, 103), dans lequel la platine porte-objet (40) peut être entraînée dans un déplacement continu au cours de la série d'étapes de lecture, et la lecture optique de l'objet (101) peut être réalisée au cours du déplacement continu de la platine porte-objet (40),
**caractérisé en ce que**
l'objectif frontal (9, 103) est fixé sur un chariot d'objectif (8), qui peut être déplacé par une commande de chariot (5, 6, 10, 11) parallèlement à la platine porte-objet (40), lequel chariot d'objectif (8) peut être entraîné avec l'objectif frontal (9, 103), à chacune des étapes de lecture, pour une étape de déplacement en avant, dans laquelle l'objectif frontal (9, 103) est déplacé conjointement depuis une position de départ en synchronisme avec la platine porte-objet (40), et, respectivement, entre des étapes de lecture successives pour un déplacement en arrière en position de départ.

2. Dispositif à balayage (50) selon la revendication 1,
dans lequel la commande de chariot (5, 6, 10, 11) présente un dispositif de déplacement en avant (5, 6) avec un élément piézoélectrique.

3. Dispositif à balayage (50) selon la revendication 1 ou 2,
dans lequel la commande de chariot (5, 6, 10, 11) présente un dispositif de déplacement en arrière (10, 11) avec un aimant permanent.

4. Dispositif à balayage (50) selon la revendication 2,
dans lequel l'élément piézoélectrique présente une course maximale, qui se situe dans la plage comprise entre 100 µm et 1 mm et atteint en particulier 500 µm.

5. Dispositif à balayage (50) selon la revendication 2 ou 4,
dans lequel l'élément piézoélectrique peut fonctionner à une fréquence dans la plage comprise entre 5 Hz et 200 Hz, en particulier à une fréquence comprise entre 25 et 120 Hz.

6. Dispositif à balayage (50) selon l'une quelconque des revendications 1 à 5, dans lequel l'objectif frontal (9, 103) présente une portée optique (102) sur l'objet (101) et dans lequel l'objectif de balayage (4, 7 à 10) présente une portée optique (104) sur l'objet (101), la portée optique (102) de l'objectif frontal étant supérieure à la portée optique (104) de l'objectif de balayage.

7. Dispositif à balayage (50) selon l'une quelconque des revendications 1 à 6, comprenant un élément piézoélectrique supplémentaire (3) monté sur l'objectif de balayage (4, 7 à 10) de sorte que l'objectif de balayage (4, 7 à 10) soit ajustable le long de son axe optique afin que le foyer de l'objectif de balayage (4, 7 à 10) soit réglable pour enregistrer un profil en profondeur de l'objet (101).

8. Procédé pour la lecture optique d'un objet (101) dans une série d'étapes de lecture au moyen d'un dispositif à balayage (50), en particulier au moyen d'un microscope à balayage, qui présente un objectif de balayage (4, 7 à 10) avec un objectif frontal (9, 103), dans lequel les étapes de lecture sont réalisées au cours du déplacement en continu de l'objet (101),
**caractérisé en ce que**
les étapes de lecture sont réalisées en déplaçant conjointement l'objectif frontal (9, 103) de l'objectif de balayage (4, 7 à 10) au cours de chacune des étapes de lecture depuis une position de départ en synchronisme avec l'objet (101) et en le ramenant respectivement entre les étapes de lecture en position de départ.

9. Procédé selon la revendication 8,
dans lequel le déplacement conjoint de l'objectif frontal (9, 103) s'effectue au cours des étapes de lecture au moyen d'un élément piézoélectrique.

10. Procédé selon la revendication 8 ou 9,
dans lequel le déplacement en arrière de l'objectif frontal (9, 103) se fait entre les étapes de lecture au moyen d'un aimant permanent (10).

11. Procédé selon l'une quelconque des revendications 8 à 10,
dans lequel on utilise un tel objectif de balayage (4, 7 à 10) avec une portée optique (104) et un tel objectif frontal (9, 103) avec une portée optique (102) de sorte que la portée optique (104) de l'objectif de balayage sur l'objet (101) soit supérieure à la portée optique (102) de l'objectif frontal sur l'objet (101).

12. Procédé selon l'une quelconque des revendications 8 à 11,
dans lequel on utilise un élément piézoélectrique supplémentaire (3) monté sur l'objectif à balayage (4, 7 à 10) pour pouvoir ajuster l'objectif de balayage (4, 7 à 10) le long de son axe optique de sorte que le foyer de l'objectif de balayage (4, 7 à 10) puisse être réglé pour enregistrer un profil en profondeur de l'objet (101) au cours du déplacement conjoint de l'objectif frontal (9, 103) avec l'objet (101).
